# EUROPEAN PATENT SPECIFICATION

(11) **EP 1 173 323 B1**
(45) Date of publication and mention of the grant of the patent: **02.07.2003**
(21) Application number: 00920307.6
(22) Date of filing: 19.04.2000
(51) Int. Cl.: B29C 71/00, B29C 70/54

(54) **HOMOGENIZING PROCESS FOR FIBER-WRAPPED STRUCTURAL COMPOSITES**
VERFAHREN ZUM HOMOGENISIEREN VON FASERGEWICKELTEN VERBUNDMATERIALIEN
PROCESSUS D'HOMOGENEISATION POUR COMPOSITES STRUCTURELS ENVELOPPES DE FIBRES

(30) Priority: 23.04.1999 CA 2269976
(43) Date of publication of application: 23.01.2002
(73) Proprietor: Dynetek Industries Ltd, Calgary, Alberta T2B 3N7 (CA)
(72) Inventor: Rutz, Rene, Calgary, Alberta T3E OL3 (CA)
(74) Representative: Robinson, Ian Michael
(86) International application number: CA0000444
(87) International publication number: WO00064664

(56) References cited:
- DE-A- 3 942 046
- US-A- 4 622 086

## Description

### FIELD OF THE INVENTION

Process for the manufacture of resin-impregnated fibre reinforced structural composites and the product resulting therefrom. More particularly, fibre-wrapped pressure vessels are subjected to pressure and temperature treatment to increase their strength.

### BACKGROUND OF THE INVENTION

It is known to wrap a variety of underlying shapes with fibre so as to form fibre-reinforced plastic composite products, or FRP. The fibre acts as the structural portion wrapped over a normally weak shape. The fibres act in tension when the composite is stressed. One such example is the manufacture of fibre reinforced pressure vessels by wrapping hollow, substantially non-structural, liners with fibres.

The conventional processes for making fibre-wrapped composites result in composite products which are not as strong under load as they could be.

Conventionally, fibres are so small that they are usually massed into larger groupings before use in making FRP. Typically a multiplicity of fibres, such as upwards of 12000 fibres, are spooled into tows. Multiple tows are passed through heated resin baths containing catalysed resins prior to being mechanically wrapped onto a liner. The configuration of the winding is dependant upon the speed of rotation of the vessel liner and the rate of travel of the tow-dispensing apparatus. The most common configurations are helical, in which the tows are at a significant angle from the axis of the object being wrapped; circumferential, in which the tows are wound hoopwise around the object; and polar, in which the tows are wrapped in the direction of the longitudinal axis of the object.

The resin Is permitted to dry and is then cured. Curing relates to the process by which the resin is allowed to achieve its final chemical state and effect its purpose to provide reinforcement to the liner. Curing or chemical poly-condensation, is the formation of polymers from monomers with the release of water or another simple substance. Curing is usually performed at elevated temperatures however, room temperature may be sufficient for some types of resins.

The cured state is typically where the conventional process ends and the resulting product is pressed into service.

The manufacturing processes of the prior art appear unable to wrap the fibres onto a shape in such a way that all fibres are equally prepared to carry a tensile load, such as when restraining a vessel liner under pressure or a beam under bending. It is hypothesised that fibres within the tows are not all arranged in such a way within the resin so as to be capable of immediately carrying tensile load when pulled. More specifically, it Is hypothesised that as the fibres are wrapped, bends are introduced and when the liner is pressurised some of the fibres accept tension and others merely straighten without accepting any significant load.

US Patent 4,622,086 to Pück et al. discloses a method of fabricating a prestressed hollow body built up with at least two layers of fibre-reinforced hard-elastic plastic material. Prestressing is accomplished by heating the two or more fibre layers above the glass transition temperature (i.e. disclosed as 150 °C for an epoxide resin) and then subjecting at least one or. more layers to a force, loading and stressing the fibres in the layer. This force is maintained throughout cooling of the layers to a temperature below the glass transition temperature of the hard-elastic plastic, cooling the surrounding matrix of hard-elastic plastic to solidify and capture the stress in the loaded fibres.

The result of these inequities or disparities between fibres within the wrap is that-structural composites of the prior art are not capable of achieving as strong a wrap as is theoretically possible if all of the fibres shared the load.

### SUMMARY OF THE INVENTION

The current invention addresses the disparity in tension sharing experienced by the prior art, achieved by altering the arrangement of the fibres within the resin to effect greater ability to share tensile loads and ultimately increase the strength of the fibre-wrapped shape. This homogenisation or equalisation of the tensile load between individual fibres is accomplished by causing the fibres to move within the resin in response to load applied to the shape. Under typical operating pressures and temperatures, fibres are substantially immobile within the cured resin. Under the process of the invention, the resin properties are manipulated to permit heightened mobility therein and the fibres are manipulated to permit fibres to achieve a more optimal arrangement.

Generally, a fibre-wrapped shape or liner of a pressure vessel is subjected to elevated temperature and elevated pressure over time. The elevated temperature allows the fibres to become mobile within the resin. The elevated pressure from within the vessel effects a change in the tensile load carried by each of the discrete fibres.

The elevation in temperature of the resin must be sufficient to allow the fibres to be mobile therein and the loading or vessel pressure must be sufficient to stress the fibres and initiate their movement to a new and lower-stress arrangement. Once the resin is cooled, the multiplicity of fibres share tension load more equally.

In a broad aspect of the invention then, a process for the homogenisation of a tension in a plurality of fibres embedded in fibre-reinforced composites comprises the steps of:
- raising the temperature of the resin so as to allow the resin to soften;
- manipulating the composite so as to introduce tension into the fibres;
- maintaining resin temperature and fibre tension as long as necessary to permit the fibres to move within the resin thereby permitting the tension in the fibres to homogenise; and then
- cooling the resin and fibre matrix wherein the multiplicity of fibres are better able to share tensile loads imposed thereon..

Preferably the composite is a fibre-wrapped liner or pressure vessel and the means for introducing tension into the fibres involves pressurising the liner. Ideally the temperature is elevated to a range in which the fibres become mobile within the resin, but the properties of the resin, the fibres or the shape are not permanently degraded. Further, the tensioning of the fibres is performed without causing failure of the shape or the fibres.

More preferably, autofrettage is practised in series with the homogenizing process or simultaneously therewith and thereby achieving even greater resultant strength.

### BRIEF DESCRIPTION OF THE DRAWINGS

Figure 1 is a side view of an aluminium liner wrapped helically and circumferentially with resin-impregnated fibres;
Figure 2a is a schematic describing the wrapping, drying and curing process of the prior art which may or may not include autofrettage;
Figure 2b is a schematic describing the first embodiment wherein autofrettage and homogenizing are performed sequentially after curing;
Figure 2c is a schematic describing the novel process illustrating the second embodiment of the invention, specifically practising autofrettage and homogenizing simultaneously after curing;
Figure 2d is a schematic describing the third embodiment wherein homogenizing is practised right after curing;
Figures 3a and 3b represent fibres embedded in resin at rest and under strain respectively;
Figure 3c is a graph depicting the stress versus strain resulting from the load on a straight fibre and a misaligned fibre according to Figs. 3a and 3b;
Figure 4 is a fanciful representation or model of a fibre overwrap in which all fibres participate and achieve a theoretical ultimate tensile strength;
Figures 5a, 5b, 5c are fanciful representations of a fibre overwrap having inequities between fibres, demonstrating increased participate at increased displacement;
Figures 6a, 6b, 6c illustrate the response of fibres to the homogenisation process of this invention, namely conventional, during at the conclusion of a homogenising process, and post-process;
Figure 7 graphically illustrates the relative improvement in fibre participation between a prior art composite under stress and the process of this invention;
Figure 8a illustrates a graph of pressure versus time for a pressure vessel treating incorporating autofrettage and the follow-up cyclical testing process; and
Figure 8b illustrates a graph of pressure and temperature versus time for treatment of a pressure vessel applying the first embodiment of the invention wherein homogenisation follows autofrettage.

### DETAILED DESCRIPTION OF THE PREFERRED EMBODIMENT OF THE INVENTION

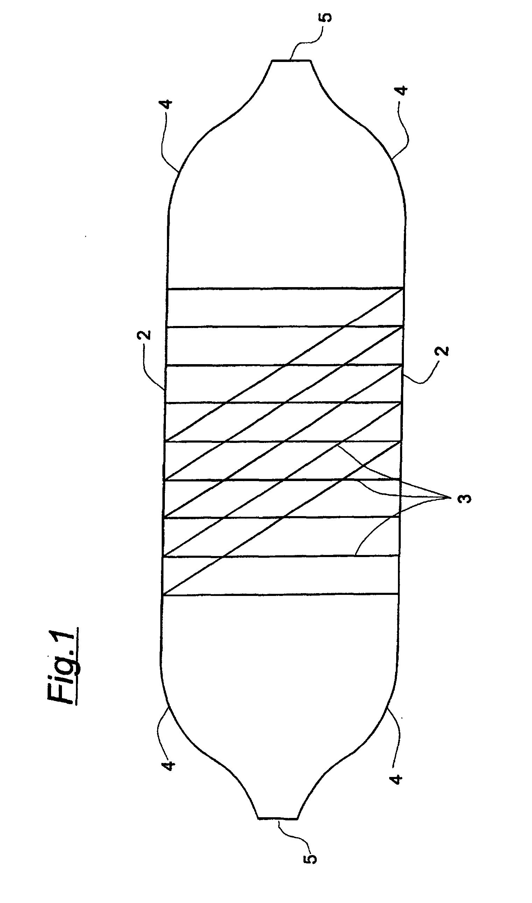

Having reference to Fig. 1, a structural composite comprises a fibre-reinforced pressure vessel 1 having a liner 2 which is wrapped with resin impregnated fibres 3. While the invention is described in terms of a pressure vessel liner, it is understood that the process is related to treating tensile bearing fibres overwrapping a shape to form a structural composite, most preferably a vessel liner 1, but also beams and the like.

In the case of a pressure vessel, the liner 2 acts to contain fluid and the fibres 3 act to reinforce the liner 2 and increase it's burst strength.

The liner 2 of the vessel 1 is an aluminium tube having hemispherical ends 4 formed thereon with axially and threaded nozzles 5 longitudinally protruding from the hemispherical ends 4.

The liner 2 is wrapped helically and circumferentially, with resin-impregnated fibres 3 using conventional technology.

The fibre tows 3 typically contain approximately 12000 fibres each. Each of the 10 or 12 tows used simultaneously to wrap the liner 2, are first passed through a heated resin bath to impregnate them with catalysed resin. The fibres and resin are mechanically wrapped onto the liner 2.

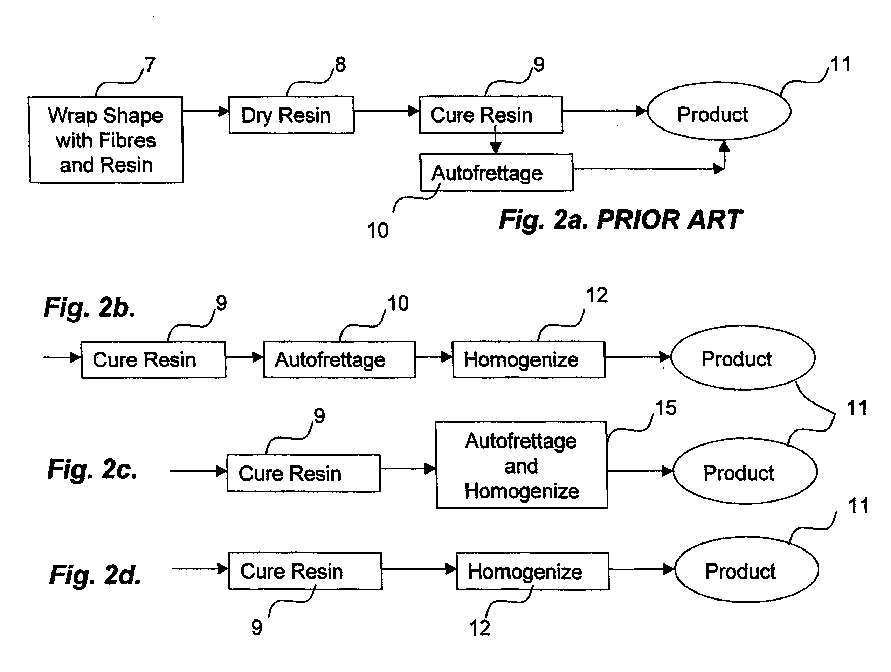

Having reference to Fig. 2a, once wrapped, the liner is air dried 8. The fibre-wrapped wrapped liner is then heated 9 in a hot air oven at about 125 degrees Celsius to cure the resin.

The cured, fibre-wrapped liner 9, if constructed of a ductile metal, may be subjected to autofrettage 10. Autofrettage 10 is the process of prestressing the aluminium liner 2 within the wrap increasing the ultimate burst pressure or the load at which its permanent deformation occurs.

In more detail, the autofrettage process 10 comprises placing the cured 9 fibre-wrapped liner 2 inside a protective housing and over-pressurising the liner 2, causing it to yield. When the pressure is released, the tension in the liner 2 diminishes and then becomes compressive at ambient pressure (pre-stressed). Accordingly, on re-pressurisation, the stress on the liner is first progressively reduced from compressive, then passes through zero, then finally becomes tensile. Pressure cycles causing tensile stress are a major factor in precipitating fatigue stress failures. With the initial pre-compressive stress, each pressure cycle results in a lower maximum tensile stress in the liner and thus improves its fatigue strength.

The foregoing constitutes the state of the art for fibre-wrapped liners.

Having reference to Figs. 2b-2d, the invention stated herein involves further treating the fibre-reinforced liner with a novel homogenizing step 12 following the curing process.

Specifically, as shown in Fig. 2b, after curing, in a first embodiment shown in Fig. 2b, the homogenizing step follows autofrettage 10. Autofrettage 10 is optionally performed on the cured vessel for acquiring additional structural gains described above, it not being a requirement of the invention.

In a second embodiment of the invention, shown in Fig.2c, the homogenizing step 12 comprises following the curing step 9 with a combined autofrettage and homogenizing step 15.

In a third embodiment shown in Fig. 2d, the homogenizing step 12 directly follows the curing step 9.

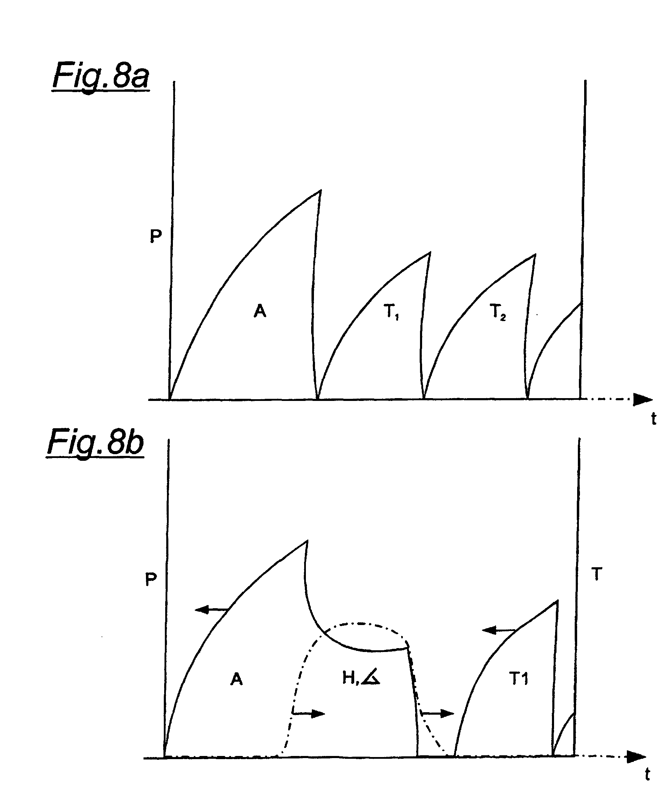

Typically, as shown in Fig. 8a, a vessel having an aluminium liner is subjected to autofrettage A. This is followed by a testing operation involving repetitive pressure cycle testing T1, T2, T3, and so on, ensuring the fibre-wrapped liner meets accepted performance standards such as those set forth by the Canadian Standards Association.

Turning to Fig. 8b which illustrates a first embodiment of the invention, the homogenizing step follows autofrettage by first safely re-pressurising the fibre-wrapped liner with liquid for expanding the liner and applying a tensile load to the fibres. The elevated pressure is maintained at above yield pressure but below burst pressure of the liner and its fibre-wrapping, while simultaneously, the temperature of the fibre-wrapped liner 2 is elevated to allow the cured resin to soften.

The elevation in temperature is accomplished by placing the fibre-wrapped liner 2 inside a chamber capable of having its ambient temperature raised and lowered. The temperature and pressure used are primarily dependant upon the type of liner and resin used.

The resin is softened to permit the fibres to become mobile within the resin. When subjected to tension, fibres, which are not absolutely straight, will generate bending stresses and lateral loads result. Because the fibres are embedded in resin, the lateral loads become imposed on the resin. Vector analysis of the axial and lateral loads on the fibres demonstrates a high resultant load and thus the desired ultimate axial load bearing capability is less as a result.

Softening of the resin, due to elevated temperature, permits the lateral load produced by a tense fibre to displace the resin and thus relax. The fibres, whether the tension is localised due to wavy misalignment or over longer lengths, are permitted to relax laterally and migrate through the resin. Higher tension fibres relax, causing lower tension fibres to start to act and increase their tension, the tension present in all acting fibres generally becoming more homogenised.

For epoxy resin the temperature must be elevated to greater than 60 degrees Celsius to soften the resin but should be maintained at less than 150 degrees Celsius to avoid degradation. The aluminium liner maintains its integrity up to temperatures of approximately 170 degrees Celsius and is therefore not at risk of degradation, should it reach the same temperature as the resin during this process.

Different liquids can be used to safely pressurise the vessel depending upon the temperature.

The applied and elevated temperature is preferably as high as possible without causing degradation of any component of the composite. It is likely that the resin is at the greatest risk. A table of various resins and their approximate temperature sensitivity is as follows:

**Table 1**

| Resin | Maximum Temp °C |
|---|---|
| Polyester | 100 |
| Epoxy | 150 |
| Phenolic Resin | 150 |
| Vinyl esters | 150 |
| Silicones | 1000 |

A table of various fibres and their temperature sensitivity is as follows:

**Table 2**

| Fibre | Type | Maximum Temp °C |
|---|---|---|
| Organic | Aramid | 350 |
| Glass | E-Mono | 400 |
| | S-Mono | 400 |
| Graphite | High Strength | 500 |
| | Low Strength | 500 |

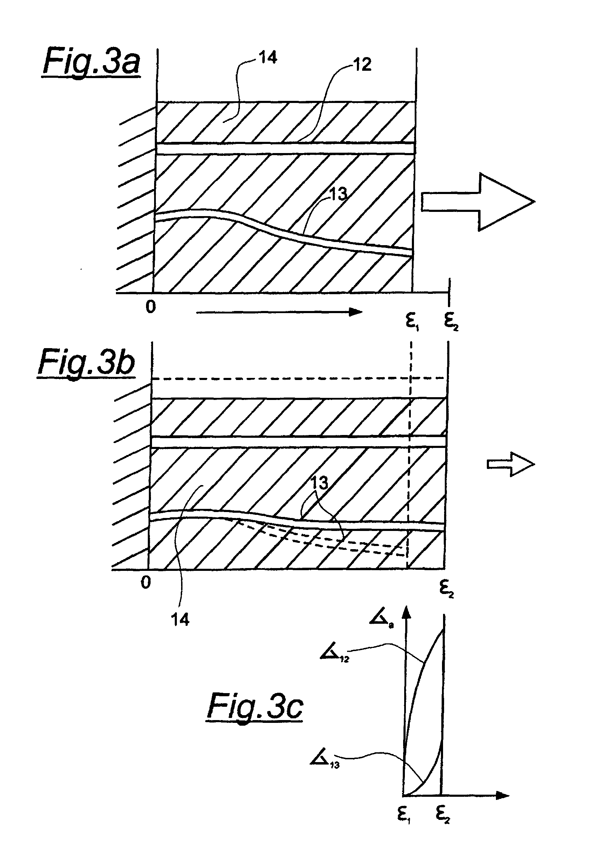

From the above, it is understood that a fibre is not properly or effectively utilised if it is not already straight when strain is imposed upon it. For example. having reference to Figs. 3a and 3b, two fibres 12, 13 are shown embedded in resin 14. Fig. 3a depicts the fibres 12, 13 at rest and Fig. 3b depicts the same fibres 12, 13 subjected to strain.

In Fig. 3a, fibre 12 is shown at rest, but in an ideal taut orientation, ready to accept tension. Fibre 13 is shown in a bent state and unable to immediately accept much tension without first straightening out.

In Fig. 3b, the resin 14 and fibre 12,13 are shown in a displaced state such when an underlying liner is pressurised. The resin 14 and fibres 12,13 have been strained or displaced from ε₁ to ε₂. Note that fibre 13 has straightened from its original orientation (see dotted lines), but is only just now ready to accept axial tension to any substantial degree.

As shown in Fig. 3c, the originally taut fibre 12 illustrates the typical stress-strain response σ₁₂ of a fibre placed under tension. The stress σ₁₃ on the bent fibre 13 only shows a minor axial stress as it straightens in the resin 14. Clearly, if fibre 12 is not demonstrating stress it cannot be sharing the load imposed upon the composite pressure vessel.

The burst pressure of the fibre-wrapped liner is dependent upon the number of the multiplicity of discrete fibres in the resin that are capable of accepting tensile or axial load.

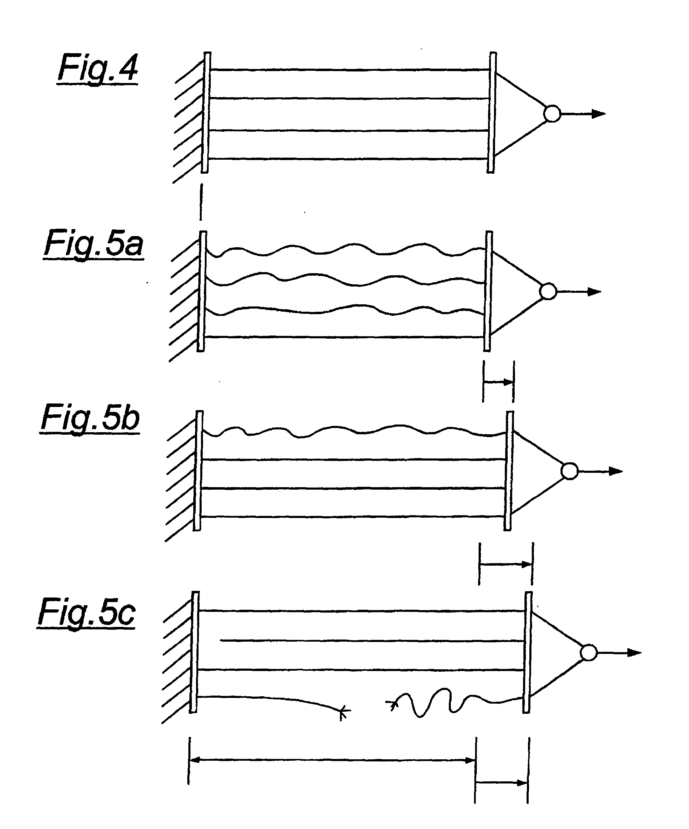

The problem is best illustrated in Fig. 4 and Figs. 5a - 5c. Fig. 4 is a diagrammatic illustration of the ideal case of four fibres which are all aligned and equally capable of accepting tensile load. Figures 5a - 5c illustrate an extreme case in which only one of four fibres of a fibre wrap are ready to immediately accept loading, the other three being lax or misaligned for some reason. More specifically, having reference back to Fig. 4, the ultimate tensile strength is theoretically achieved when all the fibres are straight and equally capable of carrying a tensile load.

In the cases shown in Figs, 5a - 5c, the incrementally increased tension in fibres, due to displacement under load, will eventually include participation of the misaligned fibres but possibly not in time to aid in contributing to the strength of the vessel.

More particularly, in Fig. 5a, three-quarters of the fibres are illustrated as not participating. In Fig. 5b, the matrix of resin and fibres is stretched sufficiently so that only one fibre is not participating. Note that in this extreme case, all the while as the displacement increases, the first taut fibre is sustaining all the stress. In Fig. 5c, finally all the misaligned fibres are participating, but the initially taut fibre has its exceeded its ultimate tensile strength and snapped. Clearly, the product wrapped as shown in Figs. 5a - 5c are not as strong as a product wrapped as shown in Fig. 4.

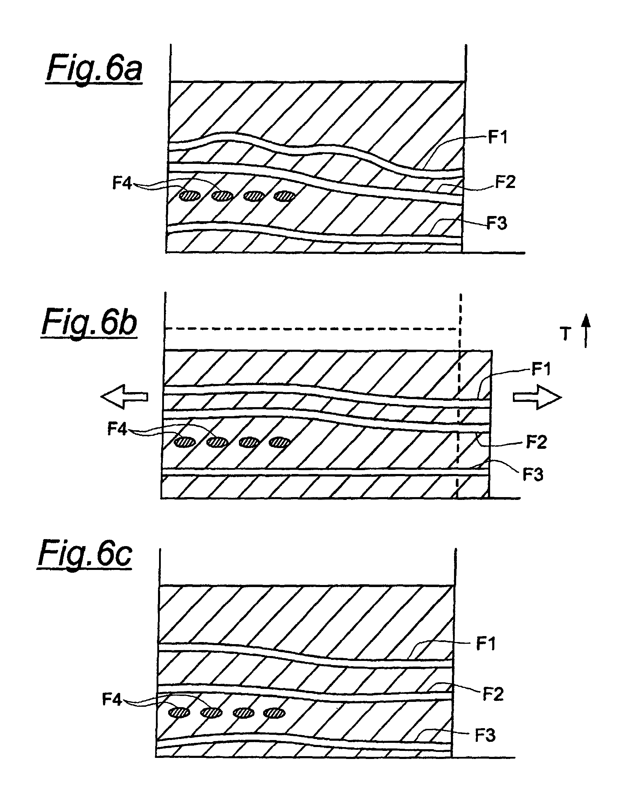

Turning to Fig. 6a, fibres embedded in a modelled block of resin are not all straight and thus must straighten or be straightened before they are capable of carrying a tensile load. The result is a decreased burst strength of the fibre-wrapped liner. Three longitudinally extending fibres F1, F2, F3 are shown underlying and overlying transverse extending fibres F4. Fibres F2 and F3 are characteristically displaced around fibres F4, introducing a slight bend in the fibres. Fibre F1 illustrates the possibility that a lax fibre will have a wave in it.

Having reference to Fig. 6b, the modelled block of resin has had its temperature elevated and its fibres F1, F2 and F3 subjected to tension. As a result, the fibres straighten and are caused to move through the mobile resin, displacing the resin and thus changing their relative positions therein.

As a result, as shown in Fig. 6c, when the tension is released, the fibres retain a more linear or straight orientation within the cooled resin. Accordingly fibres F1, F2, and F3 are ready to accept tension far earlier than they were as depicted in Fig. 6a.

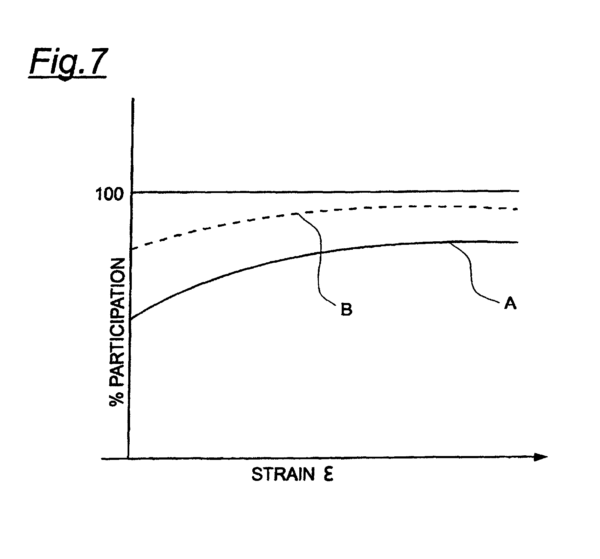

Having reference to Fig. 7, the phenomenon of inequitable load sharing is depicted fancifully in a graph as Percent Participation versus Strain (ε). As fibres become more and more strained (stretched) under increased load, more and more fibres become taut and begin to participate. A representation of the participation of the fibres of the Prior Art is shown as line A. Many fibres participate during initial strain, however greater numbers participate as the strain increases. Note that line A will never reach 100 percent participation. Not all of the fibres will contribute and those which took the load earliest could very well reach their ultimate tensile stress and fracture before others reach their full load capacity.

Line B illustrates the participation of the fibres after the homogenising process. It is not expected that the process will result in absolutely all fibres participating and thus the start point is less than 100 percent, however, more fibres participate earlier and thus a greater portion will participate overall for a given displacement or strain.

The process, as described, produces a fibre-wrapped liner that has superior burst strength heretofore not achieved.

It is clearly understood by those of ordinary skill in the art that the improvements in burst strength are in addition to those obtained from autofrettage and that the homogenizing process would obtain an improvement in strength independent of autofrettage, and that if practised simultaneously, that the elevated temperature process the homogenizing step complements the autofrettage step of the prior art.

### EXAMPLE

In an illustration of the first embodiment of the invention, an extruded aluminium liner, wrapped in carbon fibres pre-impregnated with epoxy resin is allowed to air dry, followed by curing at 125 degrees Celsius for two hours. The fibres were carbon or graphite fibres available from Mitsubishi Rayon JP as Grafil 34-700. The epoxy resin was obtained from Shell, as Epon 826/Epi CURE 9551.

Having reference to Fig 8a, autofrettage A was performed at approximately 6000 psi (40800 kPa), suitable to yield the aluminium liner. Conventionally the fibre-wrapped liner was thereafter subjected to a certification testing program. The Canadian Standards Association requires such vessels to be subjected to 11250 cycles at 1.25 times design pressure. For a design pressure of 3000 psi (20400 kPa), the fibre-wrapped liners were tested at 4500 psi (30600 kPa).

Having reference to Fig. 8b, the homogenisation process H was performed following the autofrettage process A. The pressure vessel was maintained at 70 degrees Celsius and pressures of 3000 psi (20400 kPa) for 1000 hours. As a result of the above homogenisation process, the burst strength was increased about 10 - 15%.

It is known that, the specifics of which are subject to ongoing testing programs, as the temperature is increased towards the maximum allowable temperature (150 degrees Celsius for epoxy resin) the resin will become more and more mobile, and it is anticipated that the corresponding time required at which to maintain temperature and tension in the fibres will be decreased.

The temperature and pressure are returned to ambient conditions before starting the pressure testing cycles.

As a result of practising the process of the invention, the following advantages and product are achieved:
- a 10-15% increase in the burst strength of fibre-wrapped vessels subjected and produced using this process;
- a decrease in the amount of material required to wrap the liner and consequently a decrease in production costs. As fibres comprise 40% of the overall material and production costs, a 12% saving of fibre can reduce costs by 5-6% with the additional savings realised by the decrease in time required to wrap the liners; and
- a decrease in the amount of liner material required, which in turn results in less expense and decreased weight required to maintain an equal strength.

In another embodiment of the invention, where the structure or liner materials are other than extruded aluminium, the homogenisation process of this invention may be carried out, provided alterations in temperature and pressure are made, dependant upon the type of liner material and the type of resin material used.

If the liner material of a pressure vessel is not capable of withstanding the elevated pressures associated with autofrettage, the autofrettage process is not practised.

## Claims

1. A process for manufacturing a pressure vessel comprising providing a vessel (1) wrapped with a multitude of fibres (3), the fibres (3) being embedded in resin; elevating the temperature of the resin to enable the fibres (3) to be more mobile therein; and pressurizing the vessel (1) so as to impart tension into the fibres (3);
**characterized by**:
providing a liner (2) for the vessel (1) which is formed of ductile metal and which Is wrapped with the fibres (3);
pressurizing the liner (2) beyond yield so that when the pressure is reduced, the liner (2) remains compressively prestressed by the fibres (3) and the fibres (3) are tensioned;
the elevated temperature and the tension in the fibres (3) are maintained sufficiently long so as to permit disparate tension between individual fibres (3) to homogenize, resulting in an overall lower stress in the tensioned fibres (3); and
the pressure in the vessel (1) and the temperature of the resin are reduced.

2. The homogenizing process as recited in claim 1 wherein the elevated temperature Is maintained within a range of temperature, sufficiently high enough to enable the fibres (3) to move to homogenize tension therebetween, but below a temperature at which the resin or the ductile metal liner (2) degrades.

3. The homogenizing process as recited in claim 2 wherein the ductile metal liner of the pressure vessel (2) is subjected to autofrettage (10) prior to elevating the temperature and pressure.

4. The homogenizing process as recited in claim 2 wherein the pressure within the liner (2) is sufficient to yield the liner (2) and thus achieve autofrettage (10) during the process.

5. The homogenizing process as recited in claim 4 wherein the pressure within the liner (2) is maintained below the burst pressure of the liner (2) and its wrap of fibres (3).

6. The homogenizing process as recited in claim 3 or 5 wherein the resin is epoxy and the elevated temperature is maintained between 60 and 150 degrees Celsius.

7. The homogenizing process as described In claim 3, 5 or 6 wherein the fibres (3) are carbon fibres.

8. The homogenizing process as recited in claim 3, 5 or 6 wherein the fibres (3) are glass fibres.

9. The homogenizing process as described in claim 3, 5 or 6 wherein the fibres (3) are aramid fibres.

10. A pressure vessel (2) resulting from the homogenizing process of claim 1, 2, 3, 4, 5, or 6.

## Patentansprüche

1. Verfahren zum Herstellen eines Druckbehälters, aufweisend ein Bereitstellen eines Behälters (1), umwickelt mit einer Vielzahl von Fasern (3), wobei die Fasern (3) in Harz eingebettet werden; Erhöhen der Temperartur des Harzes, um den Fasern (3) zu ermöglichen, darin mobiler zu sein; und Unterdrucksetzen des Behälters (1) so, um eine Zugspannung in die Fasern (3) einzubringen;
**gekennzeichnet durch**:
Bereitstellen einer Auskleidung (2) für den Behälter (1), die aus duktilem Metall gebildet ist und die mit den Fasern (3) umwickelt ist;
Unterdrucksetzen der Auskleidung (2) über die Streckgrenze hinaus, so dass dann, wenn der Druck verringert wird, die Auskleidung (2) kompressiv vorgespannt **durch** die Fasern (3) verbleibt und die Fasern (3) auf Zug gespannt sind;
wobei die erhöhte Temperatur und die Zugspannung in den Fasern (3) ausreichend lange beibehalten werden, um eine disparate Zugspannung zwischen individuellen Fasern (3) zuzulassen, um zu homogenisieren, was zu einer insgesamt niedrigeren Spannung in den auf Zug gespannten Fasern (3) führt; und
wobei der Druck in dem Behälter (1) und die Temperatur des Harzes verringert werden.

2. Homogenisierungsverfahren nach Anspruch 1, wobei die erhöhte Tempertatur innerhalb eines Temperaturbereichs beibehalten wird, ausreichend hoch genug, um den Fasern (3) zu ermöglichen, sich zu bewegen, um eine Zugspannung dazwischen zu homogenisieren, allerdings unterhalb einer Temperatur, bei der sich das Harz oder die Auskleitung (2) aus duktilem Metall verschlechtert.

3. Homogenisierungsverfahren nach Anspruch 2, wobei die Auskleidung aus duktilem Metall des Druckbehälters (2) einer Selbstschrumpfung (10) vor einem Erhöhen der Temperatur und des Druckes unterworfen wird.

4. Homogenisierungsverfahren nach Anspruch 2, wobei der Druck innerhalb der Auskleidung (2) ausreichend ist, um die Auskleidung (2) zu strecken und um folglich eine Selbstschrumpfung (10) während des Verfahrens zu erreichen.

5. Homogenisierungsverfahren nach Anspruch 4, wobei der Druck innerhalb der Auskleidung (2) unterhalb des Berstdruckes der Auskleidung (2) und seiner Umwicklung aus Fasern (3) beibehalten wird.

6. Homogenisierungsverfahren nach Anspruch 3 oder 5, wobei das Harz Epoxydharz ist und die erhöhte Temperatur zwischen 60 und 150 Grad Celsius beibehalten wird.

7. Homogenisierungsverfahren nach Anspruch 3, 5 oder 6, wobei die Fasern (3) Kohlenstofffasern sind.

8. Homogenisierungsverfahren nach Anspruch 3, 5 oder 6, wobei die Fasern (3) Glasfasern sind.

9. Homogenisierungsverfahren nach Anspruch 3, 5 oder 6, wobei die Fasern (3) Aramidfasern sind.

10. Druckbehälter (2), der sich aus dem Homogenisierungsverfahren nach Anspruch 1, 2, 3, 4, 5 oder 6 ergibt.

## Revendications

1. Procédé pour fabriquer un récipient sous pression, comprenant les étapes consistant à prévoir un récipient (1) enveloppé par une multitude de fibres (3), les fibres (3) étant noyées dans de la résine ; à élever la température de la résine pour rendre les fibres (3) plus mobiles dans celle-ci; et à mettre le récipient (1) sous pression afin d'impartir une tension dans les fibres (3) ; **caractérisé par** les étapes qui consistent à:
prévoir pour le récipient (1) une chemise (2) formée d'un métal ductile et enveloppée par les fibres (3) ; et
soumettre la chemise (2) à une pression au-delà de la limite élastique afin que, lors d'une réduction de la pression, la chemise (2) reste précontrainte en compression par les fibres (3) et que les fibres (3) soient mises en tension ; et en ce que :
la température élevée et la tension impartie dans les fibres (3) sont maintenues suffisamment longtemps pour permettre une homogénéisation d'une tension disparate entre les fibres individuelles (3), ce qui a pour effet de réduire une contrainte générale dans les fibres mises en tension (3) ; et
la pression dans le récipient (1) et la température de la résine sont réduites.

2. Procédé d'homogénéisation selon la revendication 1, dans lequel la température élevée est maintenue à l'intérieur d'une plage de température suffisamment élevée pour permettre aux fibres (3) de se déplacer afin d'homogénéiser la tension entre elles, mais inférieure à une température à laquelle la résine ou la chemise en métal ductile (2) se dégrade.

3. Procédé d'homogénéisation selon la revendication 2, dans lequel la chemise en métal ductile (2) du récipient sous pression est soumise à un autofrettage (10) avant l'élévation de la température et de la pression.

4. Procédé d'homogénéisation selon la revendication 2, dans lequel la pression à l'intérieur de la chemise (2) est suffisante pour déformer élastiquement cette dernière et réaliser ainsi un autofrettage (10) durant le procédé.

5. Procédé d'homogénéisation selon la revendication 4, dans lequel la pression à l'intérieur de la chemise (2) est maintenue au-dessous de la pression d'éclatement de cette dernière et de son enveloppe de fibres (3).

6. Procédé d'homogénéisation selon la revendication 3 ou 5, dans lequel la résine est une résine époxy et la température élevée est maintenue entre 60 et 150 degrés Celsius.

7. Procédé d'homogénéisation selon la revendication 3, 5 ou 6, dans lequel les fibres (3) sont des fibres de carbone.

8. Procédé d'homogénéisation selon la revendication 3, 5 ou 6, dans lequel les fibres (3) sont des fibres de verre.

9. Procédé d'homogénéisation selon la revendication 3, 5 ou 6, dans lequel les fibres (3) sont des fibres d'aramide.

10. Récipient sous pression (2) résultant du procédé d'homogénéisation de la revendication 1, 2, 3, 4, 5 ou 6.
